# EUROPÄISCHE PATENTSCHRIFT

(11) **EP 2 157 815 B1**
(45) Veröffentlichungstag und Bekanntmachung des Hinweises auf die Patenterteilung: **27.04.2011**
(21) Anmeldenummer: 09166168.6
(22) Anmeldetag: 23.07.2009
(51) Int. Cl.: H04R 25/00

(54) **Hörhilfegerät mit einer Wandlerschutzeinrichtung**
Hearing aid with a transducer protection device
Appareil d'aide auditive doté d'un dispositif de protection de transducteur

(30) Priorität: 18.08.2008 DE 102008038213
(43) Veröffentlichungstag der Anmeldung: 24.02.2010
(73) Patentinhaber: Siemens Medical Instruments Pte. Ltd., Singapore 139959 (SG)
(72) Erfinder: Gebert, Anton, 91077 Kleinsendelbach (DE)
(74) Vertreter: Maier, Daniel Oliver

(56) Entgegenhaltungen:
- EP-A- 1 562 400
- WO-A-00/03561
- WO-A-99/48328
- DE-B3-102006 008 044
- US-A- 6 164 409

## Beschreibung

Die Erfindung betrifft ein Hörhilfegerät mit einem Gehäuse, einem Eingangswandler zur Aufnahme eines Eingangssignals und Wandlung in ein elektrisches Eingangssignal, einer Signalverarbeitungseinheit zur Verarbeitung und Verstärkung des elektrischen Eingangssignals und zum Erzeugen eines elektrischen Ausgangssignals, einem Ausgangswandler zum Wandeln des elektrischen Ausgangssignals in ein von einem Benutzer als akustisches Signal wahrnehmbares Ausgangssignal und einer lösbar mit dem Hörhilfegerät verbindbaren Wandlerschutzeinrichtung, die einen Membranträger, eine Membran und einen Schallkanal aufweist, zum Schutz des Eingangswandlers oder des Ausgangswandlers vor Verschmutzung.

Hörhilfegeräte, insbesondere in dem Ohr tragbare Hörhilfegeräte (IdO), unterliegen der Verschmutzung mit Ohrenschmalz (Cerumen). Bei IdOs dringt häufig das Cerumen in die Schallauslassöffnung des Hörhilfegerätes ein und verstopft den Schallkanal zwischen dem Hörhilfegerätelautsprecher, auch Hörer oder Receiver genannt, und der Schallauslassöffnung. Das führt zu einer Reihe von Problemen, angefangen bei akustischen Beeinträchtigungen, bis hin zum Totalausfall des betreffenden Hörhilfegerätes.

Bisher gibt es viele Ansätze, bei IdOs das Eindringen von Cerumen zu verhindern. In der Regel werden entweder kappen- bzw. bügelartige Schutzvorrichtungen verwendet, die entweder als Teil des Hörhilfegeräte-Gehäuses (siehe DE 38 02 250 C1 oder US 5,327,500) oder als Ein- bzw. Aufsatz in den Schallkanal bzw. auf das Hörhilfegerät (siehe US 5,327,500 oder EP 0 312 517 A2) ausgebildet sein können. Des Weiteren sind den Schallkanal verengende Cerumenschutzeinrichtungen bekannt, die ggf. auch gitter- oder kammerförmige Barrieren aufweisen und zum Einsatz in den Schallkanal oder zum Aufsetzen auf eine Tülle bestimmt sind (siehe US 4,972,488; US 5,970,157; WO 00/03561 A1 oder DE 36 16 648 A1).

Ein wesentliches Problem stellt die Reinigung dieser Cerumenschutzeinrichtungen dar. In vielen Fällen muss die Cerumenschutzeinrichtung von Zeit zu Zeit ausgetauscht werden, was gerade bei ältern Hörhilfegeräteträgern mit einem oft beschwerlichen Gang zum Akustiker verbunden ist. Daher wurden wiederholt Cerumenschutzeinrichtungen vorgeschlagen, die eine poröse oder nicht poröse (gasdichte) Membran aufweisen (siehe EP 310 866 A1; DE 196 40 796 A1 oder US 6,164,409) und die Schallauslassöffnung abdecken. Dadurch wird das Eindringen von Cerumen weitgehend verhindert. Weiterhin sind derartige Membranen im Vergleich zu anderen Cerumenschutzeinrichtungen leichter zu reinigen. Doch auch diese müssen bei Beschädigung möglichst einfach ausgetauscht werden können. Daher verbietet sich ein fester Einbau.

Aufsetzbare Cerumenschutzeinrichtungen haben sich nicht zuletzt auch aufgrund des zusätzlichen Platzbedarfs nicht durchgesetzt. Allerdings haben bisherige einsetzbare Cerumenschutzeinrichtungen zumeist den Nachteil, den akustisch wirksamen Querschnitt des Schallkanals zu verringern, was zu akustischen Nachteilen führen kann.

Gasdichte Membranen bieten grundsätzlich den größten Schutz, erfordern allerdings die Verwendung modifizierter Hörer, um den barometrischen Druckausgleich zu gewährleisten. Der zugehörige Auslass auf der Geräteaußenseite (Faceplate) bedingt ebenfalls einen entsprechenden zusätzlichen Platzbedarf. Auβerdem muss gewährleistet sein, dass die Cerumenschutzeinrichtung sicher mit dem Schallkanal verbunden ist und dicht mit diesem abschließt. Dies wird bei einer in den Schallkanal einsetzbaren Cerumenschutzeinrichtung bisher zumeist durch eine eng am Schallkanal anliegende Verdickung bewirkt, die wulst- bzw. widerhakenförmig ausgebildet ist oder andere Elemente wie Stege, Noppen etc. aufweist.

Aus der US 2005/0074138 A1 ist eine Hörer-Lagerung bekannt, bei der sich zwischen einer Schallauslassöffnung des Hörers und einer Aufnahme in dem Hörhilfegeräte-Gehäuse ein Schallschlauch befindet.

Aus der Patentschrift DE 10 2006 008 044 B3 ist ein Hörhilfegerät mit einem Hörer und einer gasdichten Cerumenschutzeinrichtung bekannt, bei dem ein Druckausgleichskanal in den Schallkanal zwischen dem Hörer und der Cerumenschutzeinrichtung mündet. Dabei wird durch die spezielle Anordnung des Druckausgleichskanals ein Verstopfen desselben zumeist verhindert. In den seltenen Fällen, in denen der Druckausgleichskanal dennoch verstopft, ist allerdings die Reinigung schwierig.

Aufgabe der vorliegenden Erfindung ist es daher, bei einem Hörhilfegerät mit einer Wandlerschutzeinrichtung und einem Druckausgleichskanal in einfacher Weise die beabsichtigte Funktion des Druckausgleichskanals zu gewährleisten.

Diese Aufgabe wird durch ein Hörhilfegerät mit den Merkmalen gemäß Patentanspruch 1 gelöst. Vorteilhafte Weiterbildungen sind durch die Unteransprüche gekennzeichnet.

Bei einem Hörhilfegerät wird mittels eines Eingangswandlers ein Eingangssignal aufgenommen und in ein elektrisches Eingangssignal überführt. Üblicherweise dient als Eingangswandler wenigstens ein Mikrofon, welches ein akustisches Eingangssignal aufnimmt und in ein elektrisches Eingangssignal wandelt. Moderne Hörhilfegeräte umfassen häufig ein Mikrofonsystem mit mehreren Mikrofonen um einen von der Einfallsrichtung akustischer Signale abhängigen Empfang, eine Richtcharakteristik, zu erreichen. Als Eingangswandler sind jedoch auch Telefonspulen oder Antennen zur Aufnahme elektromagnetischer Eingangssignale und Wandlung in elektrische Eingangssignale üblich. Die durch den Eingangswandler in elektrische Eingangssignale gewandelten Eingangssignale werden zur Weiterverarbeitung und Verstärkung einer Signalverarbeitungseinheit zugeführt. Die Weiterverarbeitung und Verstärkung erfolgt zum Ausgleich des individuellen Hörverlustes eines Benutzers in der Regel in Abhängigkeit der Signalfrequenz des Einganssignals. Die Signalverarbeitungseinheit liefert an ihrem Ausgang ein elektrisches Ausgangssignal, welches über einen Ausgangswandler dem Gehör des Hörhilfegeräteträgers zugeführt wird, so dass dieser das Ausgangssignal als akustisches Signal wahrnimmt. Als Ausgangswandler werden üblicherweise Hörer verwendet, die ein akustisches Ausgangssignal erzeugen. Es sind jedoch auch Ausgangswandler zur Erzeugung mechanischer Schwingungen bekannt, die direkt bestimmte Teile des Gehörs, wie beispielsweise die Gehörknöchelchen, zu Schwingungen anregen. Weiterhin sind Ausgangswandler bekannt, die direkt Nervenzellen des Gehörs stimulieren. Ein Hörhilfegerät umfasst ferner eine Spannungsquelle (Batterie oder Akku) zur Spannungsversorgung der elektronischen Komponenten. Weiterhin können auch Bedienelemente (Ein-/Ausschalter, Programmumschalter, Lautstärkesteller etc.) vorhanden sein.

Die Erfindung kann bei allen bekannten Hörhilfegeräte-Typen angewendet werden, beispielsweise bei hinter dem Ohr tragbaren Hörhilfegeräten, in dem Ohr tragbaren Hörhilfegeräten, implantierbaren Hörhilfegeräten oder Taschenhörhilfegeräten. Weiterhin kann das Hörhilfegerät gemäß der Erfindung auch Teil eines mehrere Geräte zur Versorgung eines Schwerhörigen umfassenden Hörgerätesystems sein, z.B. Teil eines Hörgerätesystems mit zwei am Kopf getragenen Hörhilfegeräten zur binauralen Versorgung oder Teil eines Hörgerätesystem, bestehend aus einem am Kopf tragbaren Gerät und einer am Körper tragbaren Prozessoreinheit.

Weiterhin müssen nicht alle Komponenten eines erfindungsgemäβen Hörhilfegerätes in einem einzigen Gehäuse angeordnet sein. So kann beispielsweise ein hinter dem Ohr tragbares Hörhilfegerät eine in dem Ohr tragbare Otoplastik umfassen, wobei der Hörer und die Wandlerschutzeinrichtung in bzw. an der Otoplastik angebracht sind.

Die Wandlerschutzeinrichtung kann sowohl zum Schutz eines oder mehrerer Mikrofone eines erfindungsgemäßen Hörhilfegerätes als auch zum Schutz des Hörers vor Schmutz, insbesondere Cerumen, Feuchtigkeit etc verwendet werden.

Wie bei dem aus der Patentschrift DE 10 2006 008 044 B3 bekannten Hörhilfegerät verhindert auch bei dem Hörhilfegerät gemäß der Erfindung die Membran der Wandlerschutzeinrichtung das Eindringen von Schmutz oder Feuchtigkeit in den Druckausgleichskanal. Sollte es in seltenen Fällen dennoch zum Verstopfen des Druckausgleichskanals kommen, etwa in Folge einer schadhaften Membran der Wandlerschutzeinrichtung, so bietet die Erfindung den Vorteil, dass wenigstens ein Abschnitt des Druckausgleichskanals zusammen mit der Wandlerschutzeinrichtung auswechselbar ist. Dabei wird die Wandlerschutzeinrichtung als Verschleißteil ohnehin von Zeit zu Zeit ausgewechselt. So wird die Verstopfungsgefahr des Druckausgleichskanals stark vermindert bzw. ein verstopfter Druckausgleichskanal leicht durch einen neuen, offenen Druckausgleichskanal ersetzt.

Eine vorteilhafte Ausgestaltung der Erfindung sieht vor, dass der Druckausgleichskanal in wenigstens zwei Teilabschnitte unterteilt ist, wobei der erste Teilabschnitt durch die Wandlerschutzeinrichtung und der zweite Abschnitt durch das Gehäuse oder die Otoplastik des betreffenden Hörhilfegerätes verläuft, wodurch ein durchgängiger Kanal zwischen dem Schallkanal und dem Innenraum des betreffenden Hörhilfegerätes bzw. der Otoplastik entsteht. Vorteilhaft weist der durch die Wandlerschutzeinrichtung verlaufende und damit leicht austauschbare Abschnitt des Druckausgleichskanals einen geringeren Querschnitt als der durch das Gehäuse bzw. die Otoplastik des Hörhilfegerätes verlaufende Abschnitt des Druckausgleichskanals auf. Damit wird gewährleistet, dass beispielsweise in Folge einer schadhaften Membran der Wandlerschutzeinrichtung eindringende Schmutzpartikel bereits in dem ersten Abschnitt des Druckausgleichskanals hängen bleiben und somit nach einem Austausch der schadhaften Wandlerschutzeinrichtung die beabsichtigte Funktion des Druckausgleichskanals wieder voll gewährleistet ist.

Ein barometrischer Druckausgleich für den Hörer oder das Mikrofon eines Hörhilfegerätes ist insbesondere dann erforderlich, wenn die verwendete Wandlerschutzeinrichtung eine luftundurchlässige, nicht poröse Membran aufweist. Ein barometrischer Druckausgleich gemäß der Erfindung kann jedoch auch bei der Verwendung einer porösen Membran vorteilhaft sein, da die Verschmutzung einer porösen Membran, insbesondere durch Cerumen oder Feuchtigkeit, dazu führen kann, dass diese ihre Luftdurchlässigkeit verliert und damit ein Druckausgleich durch die Membran nicht mehr gewährleistet ist.

In der Regel ist es für den barometrischen Druckausgleich völlig ausreichend, wenn sowohl die Wandlerschutzeinrichtung als auch das Gehäuse des betreffenden Hörhilfegerätes jeweils einen einzigen Druckausgleichskanal aufweisen. Selbstverständlich ist es jedoch auch möglich, dass die Wandlerschutzeinrichtung oder das Gehäuse des Hörhilfegerätes (oder beide) jeweils mehrere Druckausgleichskanäle umfassen. Dadurch bleibt der Druckausgleich selbst dann noch gewährleistet, wenn ein Druckausgleichskanal verstopft ist.

Ein in dem Ohr getragenes Hörhilfegerät gemäß der Erfindung muss nicht notwendigerweise alle zur Versorgung eines Schwerhörigen erforderlichen Komponenten innerhalb eines einzigen Gehäuses aufweisen. Vielmehr ist es auch möglich, dass das Hörhilfegerät gemäß der Erfindung in einem im Gehörgang getragenen Gehäuse lediglich den Hörer enthält und alle weiteren erforderlichen, elektrischen oder elektronischen Komponenten in einem weiteren Gerät enthalten sind, welches außerhalb des Gehörgangs, zum Beispiel hinter dem Ohr, getragen wird. Die zwischen dem weiteren Gerät und dem Hörhilfegerät bestehende Verbindung ist vorzugsweise drahtgebunden, sie kann aber auch beispielsweise als elektromagnetische Funkverbindung ausgebildet sein.

Die Herstellung eines Hörhilfegerätes gemäß der Erfindung erfolgt vorzugsweise mit einem Computer-unterstützten Fertigungsverfahren, bei dem zunächst Daten über den individuellen Verlauf des Ohrkanals einer Person ermittelt werden. Aus der digitalen Repräsentation der internen Konturen des betreffenden Ohrkanals wird dann zunächst ein virtuelles Abbild einer Gehäuseschale entworfen, die exakt zu dem betreffenden Ohrkanal passt. In diesem Computermodell können bereits Komponenten des Hörhilfegerätes (Mikrofone, Hörer, Spannungsquelle, Elektronik etc) virtuell platziert werden. Auch die Lokalisation der Wandlerschutzeinrichtung sowie die zu deren Befestigung erforderliche Aufnahme in dem Gehäuse des Hörhilfegerätes lassen sich so bereits an dem Computermodell festlegen. Weiterhin lassen sich Anfangs- und Endpunkt des Druckausgleichskanals gemäß der Erfindung sowie der genaue Verlauf des Druckausgleichskanals bereits anhand des Computermodells planen. Die Fertigung der Schale des Hörhilfegerätes mit der integrierten Aufnahme für die Wandlerschutzeinrichtung und dem Druckausgleichskanal gemäß der Erfindung erfolgt dann in einem computergesteuerten Fabrikationsprozess, z.B. mittels Lasersintern, Stereolithografie oder einem Thermojet-Druckverfahren. Dabei wird ein reales Hörhilfegerätegehäuse exakt nach dem Abbild des dreidimensionalen Computermodells erzeugt.

Die Erfindung wird nachfolgend anhand eines Ausführungsbeispiels näher erläutert. Es zeigen:
- FIG 1: ein in dem Ohr tragbares Hörhilfegerät nach dem Stand der Technik und
- FIG 2: einen Abschnitt im Bereich der Schallaustrittsöffnung eines Hörhilfegerätes gemäß der Erfindung.

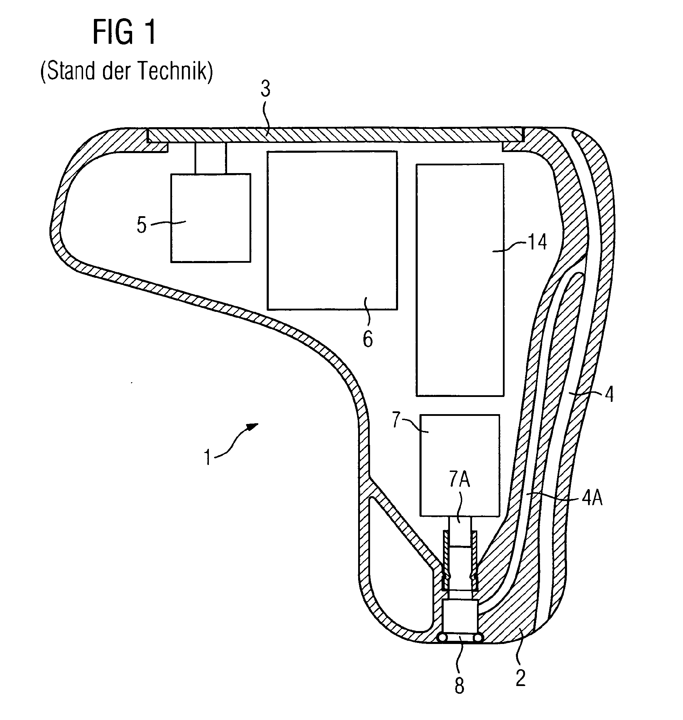

Fig. 1 zeigt ein aus dem Stand der Technik bekanntes, in dem Ohr tragbares Hörhilfegerät 1 mit einem Gehäuse 2, das einen bei getragenem Hörhilfegerät dem Trommelfell eines Benutzers zugewandten ersten Gehäusebereich und einen dem Trommelfell abgewandten, zweiten Gehäusebereich aufweist. Letzterer wird üblicherweise als Faceplate 3 bezeichnet. Das Hörhilfegerät 1 ist zwischen dem ersten und dem zweiten Gehäusebereich von einem Belüftungskanal 4 zur Belüftung des bei getragenem Hörhilfegerät 1 von dem Hörhilfegerät 1 eingeschlossenen Gehörgang-Volumens durchzogen. In dem Gehäuse 2 des Hörhilfegerätes 1 befinden sich wenigstens ein Mikrofon 5 zur Aufnahme eines akustischen Eingangssignals und Wandlung in ein elektrisches Eingangssignal, eine Signalverarbeitungseinheit 6 zur Verarbeitung und frequenzabhängigen Verstärkung des elektrischen Eingangsignals und zur Erzeugung eines elektrischen Ausgangssignals sowie ein Hörer 7 zur Wandlung des elektrischen Ausgangssignals in ein akustisches Ausgangssignal, das über einen Schallkanal 13 dem Gehör des Benutzers zugeführt wird. Ferner ist zur Spannungsversorgung der elektronischen Komponenten des Hörhilfegerätes 1 eine Spannungsquelle 14 in Form einer Batterie oder eines Akkus vorhanden. Zum Ein- und Ausbau der elektronischen Komponenten in das Hörhilfegerät 1 ist die Faceplate 3 teilweise von dem übrigen Gehäuse 2 lösbar. Die Faceplate 3 kann ggf. auch mit Bedienelementen (nicht dargestellt) versehen sein.

Zum Schutz des Hörers 7 vor dem Eindringen von Feuchtigkeit und Schmutz, insbesondere in Form von Cerumen, ist eine Cerumenschutzeinrichtung 8 mit einer nicht porösen und damit gasundurchlässigen Membran vorhanden. Damit der Hörer 7 auch bei Luftdruckschwankungen funktionsfähig bleibt, ist ein barometrischer Druckausgleich für das zwischen dem Hörer 7 und der Cerumenschutzeinrichtung 8 eingeschlossene Volumen erforderlich. Bei dem aus dem Stand der Technik bekannten Hörhilfegerät 1 gemäß Figur 1 ist hierzu ein Druckausgleichskanal 4A vorgesehen, dessen eines Ende in dem Belüftungskanal 4 und dessen anderes Ende in dem Schallkanal zwischen dem Hörer 7 und der Cerumenschutzeinrichtung 8 mündet.

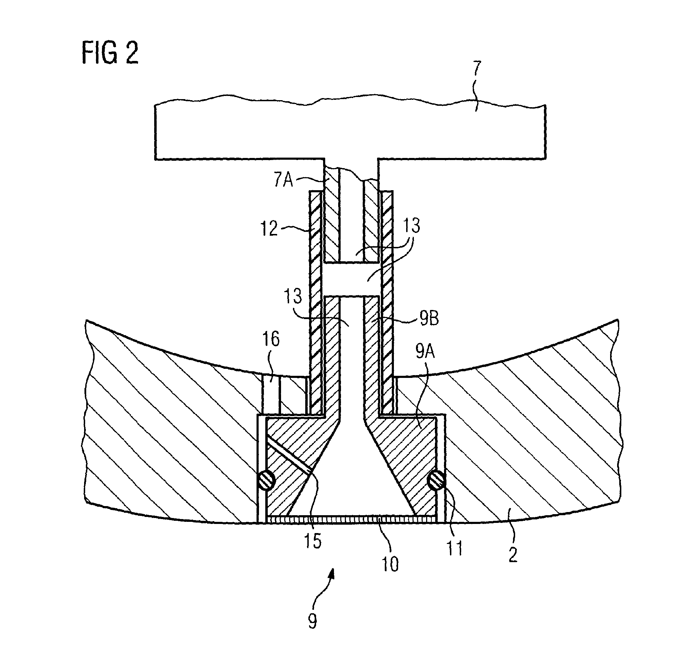

FIG 2 zeigt ein Ausführungsbeispiel eines Hörhilfegerätes gemäß der Erfindung. Um die wesentlichen Details besser erkennen zu können, ist lediglich der bei getragenem Hörhilfegerät in Richtung zum Trommelfell weisende Abschnitt des Hörhilfegerätes dargestellt. Dabei bildet eine Aussparung mit einer Durchgangsöffnung im Gehäuse 2 des Hörhilfegerätes die Schallauslassöffnung des Hörhilfegerätes. FIG 2 zeigt die Schallauslassöffnung des Hörhilfegerätes mit einer darin eingesetzten Wandlerschutzeinrichtung 9. Diese umfasst eine nicht poröse Membran 10, die an einem Membranträger 9A befestigt ist. Der Membranträger 9A selbst bildet einen trichterförmigen Hohlraum, dessen Durchmesser sich in Richtung zu der Membran 10 vergrößert. Die der Membran 10 gegenüberliegende Seite des Membranträgers 9A geht in einen rohrförmigen Schallkanal 9B über. Weiterhin sind aus FIG 2 der Hörer 7 mit dem Schallauslassstutzen 7A ersichtlich, wobei letzterer die Schallauslassöffnung des Hörers 7 bildet. Das rohrförmige Ende 9B der Wandlerschutzeinrichtung 9 ist über einen elastischen Schallschlauch 12 mit dem Schallauslassstutzen 7A des Hörers 7 verbunden. Dadurch entsteht ein durchgängiger Schallkanal 13 zwischen dem Hörer 7 und der Membran 10. Zur akustischen Abdichtung und auch um das Eindringen von Feuchtigkeit oder Schmutz in das Hörhilfegerät zu vermeiden, umfasst die Wandlerschutzeinrichtung 9 gemäß dem Ausführungsbeispiel ferner eine O-Ring-Dichtung 11, die die Wandlerschutzeinrichtung 9 gegenüber dem Gehäuse 2 des Hörhilfegerätes abdichtet. Darüber hinaus wird die Wandlerschutzeinrichtung 9 durch die Dichtung 11 in dem Gehäuse 2 fixiert. Durch den beschriebenen Aufbau entsteht eine lösbare Verbindung der Wandlerschutzeinrichtung 9 mit dem Hörhilfegerät. Somit kann eine schadhafte Wandlerschutzeinrichtung 9 mit einem geeigneten Werkzeug (nicht dargestellt) bei Bedarf gegen eine neue, unbeschädigte Wandlerschutzeinrichtung 9 ausgetauscht werden. Bei einer entsprechend passgenauen Ausbildung der Wandlerschutzeinrichtung 9 und der dafür vorgesehenen Aussparung in dem Gehäuse 2 kann ggf. auf Dichtungsmittel (z.B. die O-Ring-Dichtung 11) auch verzichtet werden.

Gemäß der Erfindung umfasst die Wandlerschutzeinrichtung 9 gemäß dem Ausführungsbeispiel einen Druckausgleichskanal 15, der einen Druckausgleich zwischen dem Schallkanal 13 und dem von dem Gehäuse 2 umgebenen Innenraum des Hörhilfegerätes erzeugt. Im Ausführungsbeispiel mündet ein Ende des Druckausgleichskanals 15 in den trichterförmigen Hohlraum der Wandlerschutzeinrichtung 9. Das gegenüberliegende Ende mündet in einem Abschnitt der Seitenwand der Wandlerschutzeinrichtung 9, der zwischen der O-Ring-Dichtung 11 und dem Innenraum des Hörhilfegerätes liegt. Bei ordnungsgemäßer Funktion der Membran und der O-Ring-Dichtung 11 wird dadurch das Eindringen von Schmutz oder Feuchtigkeit in den Druckausgleichskanal 15 verhindert.

Eine Durchgangsöffnung durch das Gehäuse 2 bildet den zweiten Teilabschnitt 16 des Druckausgleichskanals 15, 16 zwischen dem Schallkanal 13 und dem Inneren des Hörhilfegerätes. Die akustischen Eigenschaften des Druckausgleichskanals 15, 16 werden durch dessen Querschnitt und insbesondere den Bereich des geringsten Querschnitts bestimmt. Da der Druckausgleichskanal 15, 16 zu unbeabsichtigtem Feedback führen kann, wird ein möglichst geringer Querschnitt bevorzugt. Im Ausführungsbeispiel ist der Querschnitt des durch das Gehäuse 2 verlaufenden zweiten Teilabschnitts 16 des Druckausgleichskanals 15, 16 größer als der Querschnitt des durch die Wandlerschutzeinrichtung 9 verlaufenden ersten Teilabschnitts 15. Kommt es beispielsweise in Folge einer schadhaften Membran 10 zu einer Verstopfung des Druckausgleichskanals, so wird diese mit hoher Wahrscheinlichkeit im Bereich des geringsten Querschnitts und damit in dem innerhalb der Wandlerschutzeinrichtung verlaufenden ersten Teilabschnitt 15 erfolgen. Eine Verstopfung in diesem Bereich kann jedoch leicht durch einen Austausch der schadhaften Wandlerschutzeinrichtung 9 beseitigt werden.

Insgesamt liefert die Erfindung dadurch eine einfach handhabbare und kostengünstige Möglichkeit zum barometrischen Druckausgleich des Hörers.

Die beispielhaft für den Hörer gezeigte Wandlerschutzeinrichtung kann analog auch zum Schutz eines oder mehrerer Mikrofone eines betreffenden Hörhilfegerätes verwendet werden.

## Patentansprüche

1. Hörhilfegerät (1) umfassend
- ein Gehäuse (2),
- einen Eingangswandler (5) zur Aufnahme eines Eingangssignals und Wandlung in ein elektrisches Eingangssignal,
- eine Signalverarbeitungseinheit (6) zur Verarbeitung und Verstärkung des elektrischen Eingangssignals und zum Erzeugen eines elektrischen Ausgangssignals,
- einen Ausgangswandler (7) zum Wandeln des elektrischen Ausgangssignals in ein von einem Benutzer als akustisches Signal wahrnehmbares Ausgangssignal,
- eine lösbar mit dem Hörhilfegerät (1) verbindbare Wandlerschutzeinrichtung (9), die einen Membranträger (9A), eine Membran (10) und einen Schallkanal (13) aufweist, zum Schutz des Eingangswandlers (5) oder des Ausgangswandlers (7) vor Verschmutzung,
**gekennzeichnet durch**
- einen Druckausgleichskanal (15, 16), der wenigstens in einem Teilabschnitt (15) **durch** den Membranträger (9A) verläuft, zum barometrischen Druckausgleich für den Schallkanal (13).

2. Hörhilfegerät (1) nach Anspruch 1, wobei der Eingangswandler als Mikrofon (5) ausgebildet ist.

3. Hörhilfegerät (1) nach Anspruch 1 oder 2, wobei der Ausgangswandler als Hörer (7) ausgebildet ist.

4. Hörhilfegerät (1) nach einem der Ansprüche 1 bis 3, wobei ein erster Teilabschnitt (15) des Druckausgleichskanals (15, 16) durch den Membranträger (9A) der Wandlerschutzeinrichtung (9) und ein zweiter Teilabschnitt (16) des Druckausgleichskanals (15, 16) durch das Gehäuse (2) des Hörhilfegerätes (1) verläuft.

5. Hörhilfegerät (1) nach Anspruch 4, wobei der erste Teilabschnitt (15) des Druckausgleichskanals (15, 16) einen kleineren Querschnitt als der zweite Teilabschnitt (16) des Druckausgleichskanals (15, 16) aufweist.

6. Hörhilfegerät (1) nach einen der Ansprüche 1 bis 5, wobei die Membran (10) als luftundurchlässige, nicht poröse Membran ausgebildet ist.

7. Hörhilfegerät (1) nach einem der Ansprüche 4 bis 6, wobei das Gehäuse (2) mit dem darin integrierten zweiten Teilabschnitt (16) des Druckausgleichskanals (15, 16) unter Anwendung eines Rapid-Prototyping-Verfahrens hergestellt ist.

8. Wandlerschutzeinrichtung (9) für ein Hörhilfegerät (1), das ein Gehäuse (2) einen Eingangswandler (5) zur Aufnahme eines Eingangssignals und Wandlung in ein elektrisches Eingangssignal, eine Signalverarbeitungseinheit (6) zur Verarbeitung und Verstärkung des elektrischen Eingangssignals und zum Erzeugen eines elektrischen Ausgangssignals und einen Ausgangswandler (7) zum Wandeln des elektrischen Ausgangssignals in ein von einem Benutzer als akustisches Signal wahrnehmbares Ausgangssignal aufweist, umfassend einen Membranträger (9A), eine Membran (10) und einen Schallkanal (13), **gekennzeichnet durch** einen **durch** den Membranträger (9A) verlaufenden Druckausgleichskanal (15) zum barometrischen Druckausgleich für den Schallkanal .(13).

## Claims

1. Hearing aid (1) comprising
- a housing (2),
- an input transducer (5) for receiving an input signal and converting said signal into an electrical input signal,
- a signal processing unit (6) for processing and amplifying the electrical input signal and for generating an electrical output signal,
- an output transducer (7) for converting the electrical output signal into an output signal which can be perceived by a user as an acoustic signal,
- a transducer protection device (9) which can be detachably connected to the hearing aid (1) and has a membrane support (9A), a membrane (10) and a sound channel (13) for protecting the input transducer (5) or the output transducer (7) against contamination.
**characterised by**
- a pressure equalisation channel (15, 16) which extends at least in a subsection (15) through the membrane support (9A) for the purpose of equalising the barometric pressure of the sound channel (13).

2. Hearing aid (1) according to claim 1, wherein the input transducer is embodied as a microphone (5).

3. Hearing aid (1) according to claim 1 or 2, wherein the output transducer is embodied as a receiver (7).

4. Hearing aid (1) according to one of claims 1 to 3, wherein a first subsection (15) of the pressure equalisation channel (15, 16) extends through the membrane support (9A) of the transducer protection device (9) and a second subsection (16) of the pressure equalisation channel (15, 16) extends through the housing (2) of the hearing aid (1).

5. Hearing aid (1) according to claim 4, wherein the first subsection (15) of the pressure equalisation channel (15, 16) has a smaller cross-section than the second subsection (16) of the pressure equalisation channel (15, 16).

6. Hearing aid (1) according to one of claims 1 to 5, wherein the membrane (10) is embodied as an airtight, non-porous membrane.

7. Hearing aid (1) according to one of claims 4 to 6, wherein the housing (2) with the second subsection (16) of the pressure equalisation channel (15, 16) integrated therein is produced using a rapid prototyping method.

8. Transducer protection device (9) for a hearing aid (1) that has a housing (2), an input transducer (5) for receiving an input signal and converting said signal into an electrical input signal, a signal processing unit (6) for processing and amplifying the electrical input signal and for generating an electrical output signal, and an output transducer (7) for converting the electrical output signal into an output signal which can be perceived by a user as an acoustic signal, said transducer protection device (9) comprising a membrane support (9A), a membrane (10) and a sound channel (13),
**characterised by** a pressure equalisation channel (15) extending through the membrane support (9A) for the purpose of equalising the barometric pressure of the sound channel (13).

## Revendications

1. Prothèse ( 1 ) auditive comprenant
un boîtier ( 2 ),
- un transducteur ( 5 ) d'entrée pour la réception d'un signal d'entrée et sa transformation en un signal électrique d'entrée,
- une unité ( 6 ) de traitement du signal pour traiter et amplifier le signal électrique d'entrée et pour produire un signal électrique de sortie,
- un transducteur ( 7 ) de sortie pour transformer le signal électrique de sortie en un signal de sortie pouvant être perçu comme signal acoustique par un utilisateur,
- un dispositif ( 9 ) de protection de transducteur pouvant être relié de manière amovible à la prothèse ( 1 ) auditive et comprenant un support ( 9A ) de membrane, une membrane ( 10 ) et un canal ( 13 ) pour le son, pour la protection du transducteur ( 5 ) d'entrée ou du transducteur ( 7 ) de sortie vis-à-vis de l'encrassement,
**caractérisée par**
- un canal ( 15, 16 ) de compensation de la pression, dont au moins une sous-section ( 15 ) passe à travers le support ( 9A ) de la membrane, pour la compensation barométrique de la pression pour le canal ( 13 ) pour le son.

2. Prothèse ( 1 ) auditive suivant la revendication 1, dans laquelle le transducteur d'entrée est constitué sous la forme d'un microphone ( 5 ).

3. Prothèse ( 1 ) auditive suivant la revendication 1 ou 2, dans laquelle le transducteur de sortie est constitué sous la forme d'un écouteur ( 7 ).

4. Prothèse ( 1 ) auditive suivant l'une des revendications 1 à 3, dans laquelle une première sous-section ( 15 ) du canal ( 15, 16 ) de compensation de la pression passe à travers le support ( 9A ) de membrane du dispositif ( 9 ) de protection d'un transducteur et une deuxième sous-section ( 16 ) du canal ( 15, 16 ) de compensation de la pression traverse le boîtier ( 2 ) de la prothèse ( 1 ) auditive.

5. Prothèse ( 1 ) auditive suivant la revendication 4, dans laquelle la première sous-section ( 15 ) du canal ( 15, 16 ) de compensation de la pression a une section transversale plus petite que la deuxième sous-section ( 16 ) du canal ( 15, 16 ) de compensation de la pression.

6. Prothèse ( 1 ) auditive suivant l'une des revendications 1 à 5, dans laquelle la membrane ( 10 ) est constituée sous la forme d'une membrane non poreuse et imperméable à l'air.

7. Prothèse ( 1 ) auditive suivant l'une des revendications 4 à 6, dans laquelle le boîtier ( 2 ), avec la deuxième sous-section ( 16 ) du canal ( 15, 16 ) de compensation de la pression qui y est intégrée, est fabriqué en utilisant un procédé rapid-prototyping.

8. Dispositif ( 9 ) de protection de transducteur pour une prothèse ( 1 ) auditive, qui comporte un boîtier ( 2 ), un transducteur ( 5 ) d'entrée pour la réception d'un signal d'entrée et sa transformation en un signal électrique d'entrée, une unité ( 6 ) de traitement du signal pour traiter et amplifier le signal électrique d'entrée et pour la production d'un signal électrique de sortie et un transducteur ( 7 ) de sortie pour transformer le signal électrique de sortie en un signal de sortie perceptible sous la forme d'un signal acoustique par un utilisateur, comprenant un support ( 9A ) de membrane, une membrane ( 10 ) et un canal ( 13 ) pour le son, **caractérisé par** un canal ( 15 ) de compensation de la pression qui passe à travers le support ( 9A ) de membrane, pour la compensation barométrique de la pression pour le canal ( 13 ) pour le son.
